Europäisches Patentamt

(19) European Patent Office

Office européen des brevets

(11) Publication number: 0 114 461
A1

(12) **EUROPEAN PATENT APPLICATION**

(21) Application number: 83306184.9

(22) Date of filing: 13.10.83

(51) Int. Cl.³: **B 01 D 46/00**
**B 01 D 29/00**

(30) Priority: 23.11.82 GB 8233322

(43) Date of publication of application:
01.08.84 Bulletin 84/31

(84) Designated Contracting States:
DE FR GB IT

(71) Applicant: LUCAS INDUSTRIES public limited company
Great King Street
Birmingham, B19 2XF(GB)

(72) Inventor: Campbell, Thomas
48 Broadfern Road
Knowle Solihull B93 9DD(GB)

(74) Representative: Cuddon, George Desmond et al,
Marks & Clerk Alpha Tower Suffolk Street Queensway
Birmingham B1 1TT(GB)

(54) Filter devices.

(57) A filter device has a mesh filter (19) arranged in a spiral. A part (21) of the filter (19) lies in a first flow path between an inlet (13) and an outlet (15). A further part (25) of the filter (19) defines a second flow path (22) to a second filter (24) between the inlet (13) and outlet (15). Contaminant particles in the second flow path (22) tend to adhere to the walls of the filter part (25). The filter part (25) also lies in a third flow path between the inlet (13) and outlet (15).

Fig.1.

Fig.2.

EP 0 114 461 A1

## FILTER DEVICES

This invention relates to filter devices for fluids, and in particular to filter devices for air which may be contaminated with viscous particles.

The filter device of the invention is most particularly intended for filtering air which is drawn from a compressor stage of a gas turbine engine and is subsequently required to be passed through restricted orifices to generate servo pressure signals for control of a fuel system of the engine. Air leaving the compressor is contaminated with solids drawn into the engine air intake and, to a considerable extent, with oil from the engine. A typical filter for such a purpose is disclosed in US Patent 4277262. In this filter there is only one flowpath between the inlet and outlet, and when this flowpath becomes clogged the filter must be removed for cleaning or replacement. It is an object of the invention to provide a filter device for use in the foregoing circumstances but in which a plurality of flow paths through respective filter elements are provided and in which at least one of said flow paths has walls to which viscous contaminants will readily adhere, whereby a substantial part of the contaminants may be removed before reaching the filter element in that flow path.

According to the invention there is provided a filter device comprising a housing having an inlet and an outlet, a first filter element in a first flow path between said inlet and outlet, and a second filter element in a second flow path between said inlet and outlet, said second flow path being defined, at least in part, by a boundary element having a surface on which contaminant particles flowing through said second path will readily be entrapped.

In one embodiment said boundary element comprises a third filter element located in a third flow path between said inlet and said second filter element.

In a particular embodiment said first and third filter elements comprise separate portions of a single filter part.

An embodiment of the invention will now be described by way of example only and with reference to the accompanying drawings in which:-

Figure 1 is a section through a filter device and

Figure 2 is a section on line 2-2 in Figure 1.

The device includes a housing comprising two sealingly interengaged parts 10, 11 and secured together with screws 12. An inlet 13 in the housing part 10 communicates with a chamber 14 in the part 11, the part 11 also having an outlet 15 from the chamber 14. Mounted on the part 10 are two flange members 16, 17 which are secured together by a nut and bolt combination 18. Opposed faces of the members 16, 17 are provided with aligned spiral grooves in which are located the turns of a filter 19 of stainless steel mesh.

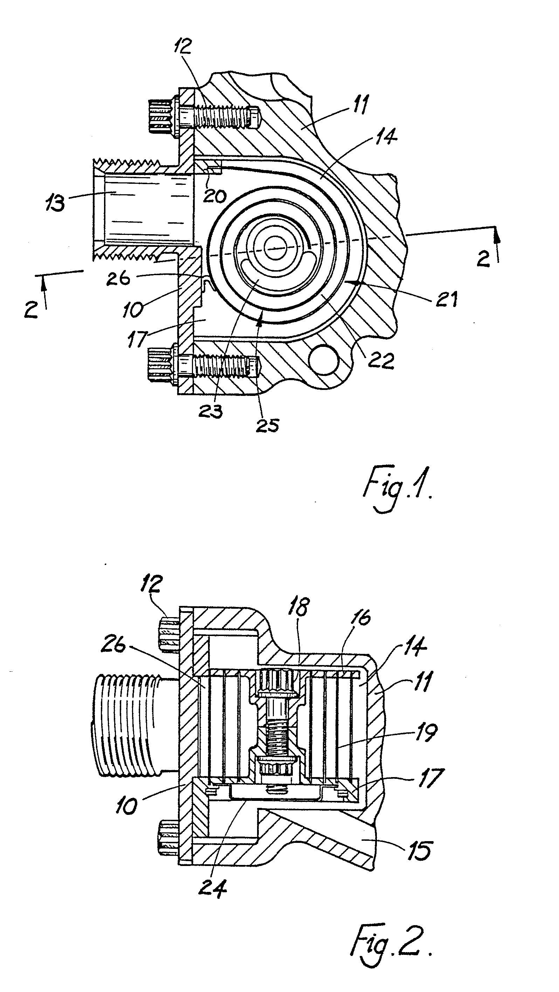

One end of the filter 19 is secured to a part 20 of the flange member 16 adjacent the housing part 10. A tongue 26 on an outer turn of the spirally arranged filter 19 sealingly engages the part 10 to define a first filter element 21 through which air can flow from the inlet 13 to a peripheral portion of the chamber 14. Inner turns of the filter 19 define a spiral passage 22 through which air can flow from the inlet 13 to an arcuate port 23 in the flange member 17 and thence through a second filter element 24 (Figure 2) to the outlet 15. The inner turns of the filter 19 effectively constitute a third filter element 25.

In use air is supplied under pressure to the inlet 13 and initially the greater part of this air flows through the element 21 of the filter 19 to the outer part of the chamber 14, and thence to the outlet 15. A small proportion of the air passes through the passage 22 and filter element 24 to the outlet 15, and a still smaller proportion radially inwardly through the filter element 25 to the port 23 and filter element 24. As the element 21 progressively becomes clogged an increasing part of the air flows through the passage 21 and element 24. The mesh of the filter 19 provides an irregular surface which will readily entrap contaminant particles in air flowing through the passage 22. Since these contaminant particles are generally oily they readily adhere to the surface of the element 25, or to particles already entrapped thereon. This entrapment and adhesion is assisted by the spiral configuration of the passage 22, which causes contaminant particles to be directed against its walls, as well as by the substantial length of the passage 22. A substantial part of the contaminants in the air flowing through the passage 22 are therefore removed before reaching the filter element 24. The filter 24 becomes clogged less slowly than the element 21, and though of lesser effective area than that element nevertheless permits an adequate air flow to the outlet 15.

The housing part 10, flange members 16, 17, the filter 19 and the element 24 may be removed as a unit from the chamber 14, enabling the filters 19, 24 to be cleaned or replaced.

CLAIMS

1. A filter device comprising a housing (10, 11) having an inlet (13) and an outlet (15), and a first filter element (21) in a first flow path between said inlet (13) and said outlet (15), characterised in that there is provided a second filter element (24) in a second flow path (22) between said inlet (13) and outlet (15) said second flow path (22) being defined, at least in part, by a boundary element (25) having a surface on which contaminant particles flowing through said second path (22) will readily become entrapped.

2. A filter device as claimed in claim 1 in which said boundary element (25) comprises a third filter element located in a third flow path between said inlet (13) and said second filter element (24).

3. A filter device as claimed in claim 2 in which said first and third filter elements (21, 25) comprise separate portions of a single filter part (19).

4. A filter device as claimed in any of claims 1 to 3 in which said second flow path (22) has one or more bends, said boundary element (25) being on the outside of the, or each, bend, whereby particles in a fluid flowing through said second path (22) are urged into contact with said boundary element (25).

5. A filter device as claimed in claim 4 in which said boundary element (25) is arranged as a spiral.

Fig.1.

Fig.2.

0114461

Application number

EP 83 30 6184

European Patent
Office

**EUROPEAN SEARCH REPORT**

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| A | GB-A-1 344 015 (E.H.G. PERCEVAUT) <br> * Claims 1,6,7; page 2, lines 87-99; figure 1 * | 1,2,4 | B 01 D 46/00 <br> B 01 D 29/00 |
| | --- | | |
| A | GB-A-1 287 790 (SULZER BROTHERS LTD.) <br> * Complete document * | | |
| | ----- | | |

| | |
|---|---|
| | TECHNICAL FIELDS SEARCHED (Int. Cl. ³) |
| | B 01 D 29/00 <br> B 01 D 46/00 |

The present search report has been drawn up for all claims

| Place of search <br> BERLIN | Date of completion of the search <br> 28-02-1984 | Examiner <br> BERTRAM H E H |
|---|---|---|